(19) Europäisches Patentamt
European Patent Office
Office européen des brevets

(11) **EP 4 748 692 A1**

(12) **EUROPEAN PATENT APPLICATION**

(43) Date of publication:
27.05.2026 Bulletin 2026/22

(21) Application number: 25195553.0

(22) Date of filing: 12.08.2025

(51) International Patent Classification (IPC):
*B62D 57/02* (2006.01)   *B60F 5/02* (2006.01)
*B64U 10/70* (2023.01)

(52) Cooperative Patent Classification (CPC):
**B62D 57/02; B60F 5/02; B64C 37/00; B64U 10/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.11.2024 EP 24214984**
**23.12.2024 EP 24223134**

(71) Applicant: **Ecole Polytechnique Fédérale de
Lausanne (EPFL)
EPFL-TTO
1015 Lausanne (CH)**

(72) Inventors:
• JUNGE, Kai
**1004 Lausanne (CH)**
• POLZIN, Max
**3011 Bern (CH)**
• HUGUES, Josie
**1025 Saint-Sulpice (CH)**

(74) Representative: **Gsmart
Route de Florissant 81
1206 Genève (CH)**

(54) **COMPLIANT ROBOT WITH ACTIVE AND PASSIVE RECONFIGURATION**

(57)   The present invention concerns a compliant Robot comprising a frame (1), a payload (2) and locomoting wheels (3) for driving as a rover or swimming, characterized in that the frame (1) comprises at least two elastic rods each configured in the shape of a ring, both rings being assembled together by short connectors (10) and long connectors (11), thereby defining a repetitive eye-shape pattern around the circumference of the rings, the robot further comprising tendons (4) actuated by winches (5) and pulling on tight locations of the frame while the wheels (3) are mounted on long connectors (11) also equipped with propellers (6).

**Fig. 1**

**Description**

The present invention concerns the field of robotics.

Robotic locomotion has shown significant advancements, yet robots still lack some versatility and agility in varied terrains. This limits their applicability in complex environments where they could be highly beneficial. Existing robots typically rely on intricate perception systems to construct detailed models of both the robot and its surroundings. Although the exploration of multi-modal, terrain-adaptive robots is growing, their capacity for morphological reconfiguration often remains confined to specific body parts or comes at the expense of increased system complexity and reduced locomotion efficiency.

The ability to autonomously traverse and locomote across terrains of varying gradient, and to overcome obstacles or extreme surfaces, remains a problem in the field of autonomous robots. Despite significant advances in robotic locomotion and exploration, the versatility, efficiency, and autonomy of robots typically limit their application to a small range of pre-known terrains or 'environmental niches'. Through advances in robotic hardware, planning methods, and learning algorithms, robots are beginning to be able to operate in geometrically complex and dynamic environments. Yet, robots still lack the robustness and adaptability to respond to varied and challenging terrains. However, the demand for robots that can operate reliably under diverse and unpredictable environmental conditions is increasing, in particular for diverse environments such as water, land and mountains, on earth or other planets. Amid increasingly severe climate events, there is a growing need for robots capable of providing support or rescue in the aftermath of landslides, earthquakes, and volcanic eruptions. In all of these scenarios, the terrain is complex, varied, and not always known in advance. By developing robots that can efficiently operate across a range of terrains, the use of robots can be extended to such applications, with the potential for significant scientific, societal, and safety impacts.

Active reconfiguration of robots has been explored but it is generally limited to some parts of the robot or to modularity facing the problem of a challenging dynamic adaptation or low speed. In addition, the changes to the underlying passive properties and morphology in the prior art are often limited, such that the range of environments in which these robots can operate robustly remains low. Also, combining several locomotion modalities have been suggested but an active reconfiguration in such cases is generally not proposed or at least not optimized, for example to lower the complexity, the cost or the energy consumption.

In this context, one purpose of the present application is to overcome at least part of the drawbacks of the prior art by providing a robot which is able to reconfigure its morphology in order to adapt to a broad range of environments and overcome obstacles of various natures.

This purpose is reached by a compliant robot comprising a frame with at least two elastic rods each configured in the shape of a ring, both rings being assembled together by short connectors at which the rods cross each other and long connectors on which locomoting wheels are mounted, thereby defining a repetitive eye-shape pattern around the circumference of the rings, wherein propellers are also mounted on said long connectors on the same side as the locomoting wheels and wherein at least two unfolding tendons are each connected to both rods but each at only one of the lower and upper parts of the eyes, such that at least two winches centered at two opposite short connectors each control the length of one of the upper or lower unfolding tendons, which are both controlled by a control unit to continuously and progressively deform and alter the robot's shape between a rover configuration with the eye-shape pattern enabling the control unit to drive the robot through the locomoting wheels, and an unfolded configuration in which the upper parts of the rods, released by the upper tendon, become outer parts by laying outside the lower parts of the rods thereby becoming inner parts, by being constrained by the lower tendon, such that the locomoting wheels and propellers rest in an upper side of the plane passing through the outer and inner parts of the rods, with propeller engines controlled by the control unit for enabling the robot to fly in the unfolded configuration. This design enables seamless transformation between ground-based rover operation and aerial flight capability, providing versatility for navigating diverse terrains and overcoming obstacles that would be impassable for conventional single-mode robots. Preferably, the two rods are crossing each other at the short connectors and thereby alternatively forming the lower part and the upper part of eyes along this pattern, said long connectors being fixed along the center of the eyes of this pattern, while the short connectors form the corners between adjacent eyes.

According to some embodiments, the connectors are rigid and the long connectors preferably prevent at least the translation of the rods of the frame along their own axes, while the short connectors retain the rods crossed relative to each other while allowing a free translation along their own axis and a free rotation around their own axis. This configuration ensures structural integrity during morphological transformation while allowing the necessary degrees of freedom for smooth reconfiguration between different operational modes. The long connectors preferably prevent at least the translation to improve the stability of the frame during reconfiguration and in each configuration but they may allow rotation and/or rotation in some embodiments since each configuration is a stable state of the frame according to the arrangement of the elastic rods and (at least in some case and/or at least to some extent) the limits imposed by the tendons on the positions and shape of the tendons.

According to some embodiments, the propeller engines each have a shaft carrying a propeller which has a diameter smaller than the diameter of the locomoting wheels. This size relationship prevents mechanical interference between the propulsion systems and ensures that the propellers remain protected within the wheel envelope during ground operations while maintaining sufficient thrust generation for flight.

According to some embodiments, the wheels each comprise a shaft which rotation axis is colinear to the rotation axis of the propeller these shafts being driven by respective engines controlled to rotate the propeller and/or wheel at different speeds with different torques by the control unit. This integrated design reduces mechanical complexity and weight while enabling independent control of flight and ground propulsion systems through differential speed and torque control.

According to some embodiments, the unfolding tendons comprise Bowden cables attached to the rods at regular intervals along the frame, wherein the cables are running freely along the rods at the level of the connectors. This implementation provides reliable and smooth tendon operation with reduced friction, ensuring precise control of the morphological transformation process.

According to some embodiments, the locomoting wheels are rimless. This design reduces weight and mechanical complexity while providing effective traction and maneuverability on various terrain types, particularly beneficial for the robot's multi-modal operation requirements.

According to some embodiments, the wheels comprise branches having an extended surface in a direction orthogonal to the movement of the branches. This configuration enhances traction and stability during ground locomotion by increasing the contact area with the terrain, improving the robot's ability to navigate challenging surfaces and facilitating swimming (i.e., navigation on water or liquids).

According to some embodiments, the robot further comprises at least two curling tendons, each of which being connected to the frame at a pair of short connectors diametrically opposed with respect to the center of the frame, each curling tendon having a variable length imposed by a respective curling winch located at the payload and controlled by the control unit, with sequenced actuation of these curling tendons by their winches enabling the control unit to continuously and progressively deform and alter the robot's frame shape between the eye-shaped rover configuration and a sphere configuration that protects the wheels, propellers and payload. This shape allows the robot to roll when located in a slope but also to pull itself out of situations where it has been stuck either in the rover configuration or the flying configuration when landed. In addition, this protective spherical configuration provides enhanced durability and damage resistance during transport, storage, or when operating in particularly harsh environments.

According to some embodiments, the control unit controls the sequenced actuation of the curling tendons by first driving one winch such that a first curling tendon pulls on the frame along a first axis more than at least a second curling tendon to obtain an oblong shape of the frame in the eye-shaped rover configuration, which is subsequently deformed to a sphere configuration by driving a second winch for actuation of the second curling tendon exerting a pulling force along a second axis mainly orthogonal to the first axis, thereby curling the oblong shape into a spherical shape of the frame wrapping up the wheels, propellers and payload. This controlled sequential transformation ensures smooth and predictable morphological changes while preventing mechanical interference between components during the reconfiguration process.

According to some embodiments, the curling winches allow relaxing the curling tendons quickly from at least partially spherical configuration to the flat rover configuration, to enable the elastic rods to induce a jump of the robot. This rapid release mechanism provides an additional locomotion capability, allowing the robot to overcome obstacles or escape from confined spaces through elastic energy storage and sudden release, enhancing its mobility and self-recovery capabilities.

Short Description of the figures:

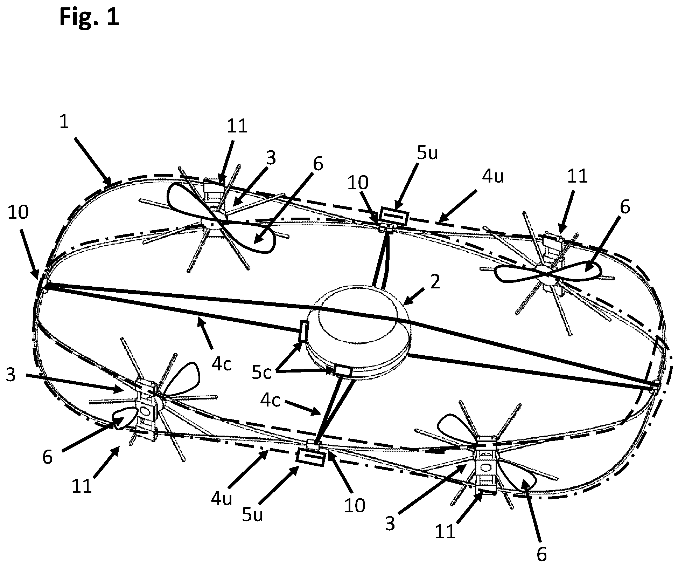

Figure 1 shows a perspective view of the compliant robot in rover configuration with the eye-shaped frame pattern, wheels, propellers, and payload visible.

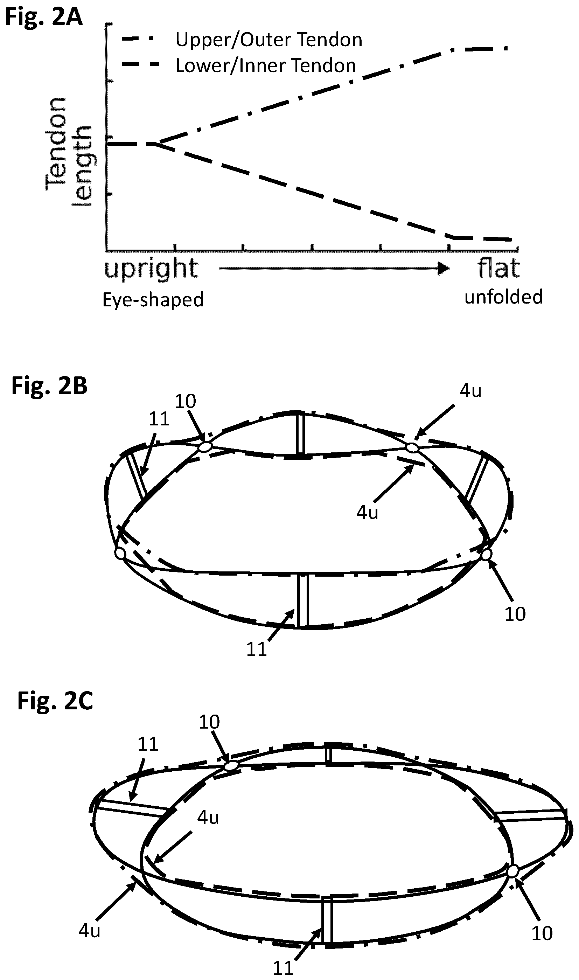

Figure 2A shows a graph illustrating the tendon length control during morphological transformation from upright eye-shaped to flat unfolded configuration, while Figures 2B and 2C show perspective views of the robot frame, respectively in the upright rover configuration with the eye-shaped pattern formed by the crossed elastic rods and in the flat unfolded configuration suitable for flight mode.

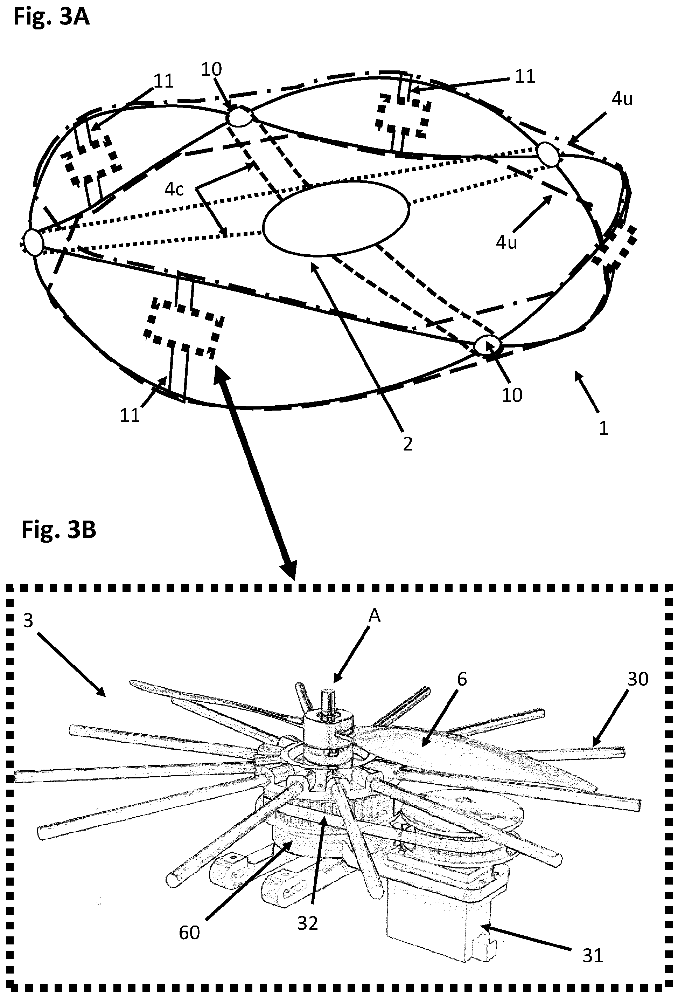

Figure 3A shows a perspective view of the robot frame with the payload, unfolding tendons, and curling tendons arrangement and Figure 3B shows a detailed view of the propulsion module including the wheel, propeller, and drive mechanism.

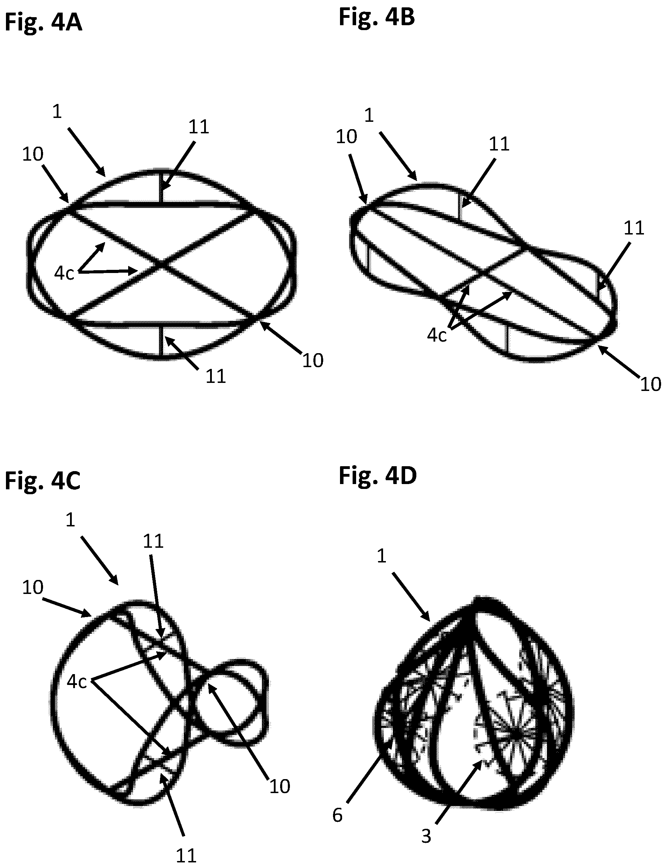

Figure 4A shows a perspective schematic view of the robot frame in a rest position of the frame in the eye-shaped pattern, while Figure 4B shows the rover configuration wherein one of the curling tendons shrinks the frame along one axis to impose a rover configuration with the wheels aligned along an axis and to protect internal components.

Figure 4C illustrates the progressive curling of the frame by showing a perspective schematic view of an intermediate configuration during the morphological transformation between rover and spherical configuration, while Figure 4D shows the fully spherical configuration with wheels and propellers protected inside the curved frame.

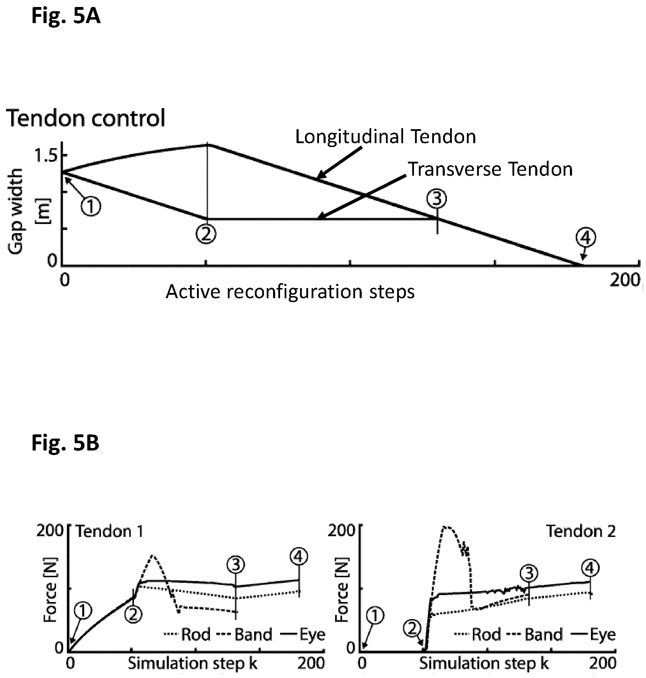

Figure 5A shows a control diagram illustrating the tendon actuation sequence during active reconfiguration between rover eye-shaped and unfolded flight configurations and Figure 5B shows force analysis graphs for the longitudinal and transverse tendons during this morphological transformation process.

Detailed Description of various embodiments:

The present invention proposes a bio-inspired approach to leverage reconfiguration of a robot to adapt its morphology to the environment.

In the present invention, the active reconfiguration of the robot leads to a change in its underlying passive properties, such that the active reconfiguration of the robot's morphology enables control over the robot's passive properties and the resulting autonomous behavior.

Below is a non-limiting explanation of the figures which are only illustrative and shold not interpreted as implying any limitation on any embodiments of the present application.

Figure 1 shows a perspective view of the compliant robot in its rover configuration, illustrating the complete system with all major components integrated. The robot comprises frame 1 formed by two elastic rods configured as rings that cross each other at short connectors 10, creating the characteristic eye-shaped pattern around the circumference. Long connectors 11 are positioned at the center of each eye-shaped section and serve as mounting points for the locomoting wheels 3 and propellers 6. The payload 2 is centrally positioned and houses the control unit along with winches 5u for controlling unfolding tendons 4u and curling winches 5c for controlling curling tendons 4c. The unfolding tendons 4u are connected to both rods but each tendon connects to only the upper or lower parts of the eye-shaped pattern, enabling morphological transformation between rover and flight configurations. The curling tendons 4c extend diametrically across the frame to enable transformation to a protective spherical configuration. This integrated design allows the robot to seamlessly switch between different locomotion modes while maintaining structural integrity and protecting internal components during transformation.

Figure 2A shows a graph illustrating the tendon length control strategy during morphological transformation from the upright eye-shaped configuration to the flat unfolded configuration. The graph demonstrates how the upper/outer tendon length increases while the lower/inner tendon length decreases during the transformation process. This coordinated tendon actuation enables the controlled morphological reconfiguration that transforms the robot's operational capabilities.

Figure 2B shows the robot frame 1 in the upright rover configuration, where the elastic rods maintain the eye-shaped pattern through the positioning of short connectors 10 and long connectors 11. The unfolding tendons 4u are visible running along the upper and lower portions of the frame structure. In this configuration, the long connectors 11 are oriented vertically, positioning the locomoting wheels and propellers for ground-based operation.

Figure 2C illustrates the same robot frame 1 in the flat unfolded configuration suitable for flight mode. The morphological transformation has been achieved through the coordinated actuation of unfolding tendons 4u, causing the upper parts of the rods to become outer parts by laying outside the lower parts of the rods, which become inner parts. The long connectors 11 are now oriented horizontally, positioning the locomoting wheels and propellers in the upper side of the plane passing through the outer and inner parts of the rods, optimizing the configuration for aerial propulsion.

Figure 3A shows a detailed perspective view of the robot frame 1 with the complete tendon arrangement and payload system. The frame comprises the characteristic crossing pattern of elastic rods connected by short connectors 10 and long connectors 11. The unfolding tendons 4u are clearly visible running along the frame structure, connecting to both rods at the upper and lower parts of the eye-shaped pattern. The curling tendons 4c extend diametrically across the frame, connecting to pairs of short connectors 10 that are diametrically opposed with respect to the center of frame 1. The central payload 2 houses the control systems and curling winches for managing the curling tendons 4c. This arrangement enables independent control of both morphological transformations: the unfolding transformation for switching between rover and flight modes, and the curling transformation for achieving the protective spherical configuration.

Figure 3B provides a detailed view of the propulsion module, showing the integration of locomoting wheel 3, propeller 6, and the drive mechanism. The propulsion module demonstrates the coaxial arrangement where the wheel 3 and propeller 6 share the same rotation axis (A), but are driven by separate engines that allow independent speed and torque control. In this example, the propeller (6) is rotated by its engine (60) bearing its shaft, while the wheel 3 (with its branches 30 that provide traction for ground locomotion), is rotated by a belt 32 between a pignon bearing the shaft of the wheel and the motor (31) for the rotation of the wheel. This kind of arrangement of the drive mechanism enable the differential control of the wheel and propeller systems. This integrated design eliminates mechanical interference between flight and ground propulsion systems while maintaining compact dimensions and reduced weight.

Figure 4A shows a perspective schematic view of the robot frame 1 in its rest position, displaying the natural eye-shaped pattern formed by the elastic rods crossing at short connectors 10 and connected by long connectors 11. The curling tendons 4c are visible in their relaxed state, allowing the frame to maintain its characteristic lens-shaped geometry. This configuration represents the stable state of the frame when no external forces are applied through the tendon system.

Figure 4B illustrates the rover configuration where one of the curling tendons 4c has been shortened to compress the frame 1 along one axis. This controlled deformation aligns the locomoting wheels along a preferred axis and provides protection for internal components while maintaining the robot's ability to drive effectively. The selective actuation of curling tendons enables the control unit to optimize the frame geometry for specific operational requirements.

Figure 4C shows an intermediate configuration during the progressive morphological transformation between the rover and spherical configurations. The frame 1 exhibits an oblong shape as the curling tendons 4c are sequentially actuated, demonstrating the controlled nature of the transformation process. This intermediate state illustrates how the sequential actuation of orthogonal curling tendons enables smooth transitions between different protective configurations.

Figure 4D presents the fully spherical configuration where both curling tendons 4c have been actuated to wrap the frame 1 into a protective sphere. In this configuration, the locomoting wheels 3 and propellers 6 are completely enclosed and protected within the curved frame structure. This spherical shape enables the robot to roll when positioned on slopes and provides enhanced protection for all external components during transport or when operating in harsh environments.

Figure 5A shows a control diagram illustrating the tendon actuation sequence during active reconfiguration between the rover eye-shaped and unfolded flight configurations. The graph displays the gap width control over 200 active reconfiguration steps, showing how the longitudinal tendon and transverse tendon are coordinated to achieve the morphological transformation. The numbered points 1, 2, 3, and 4 indicate key stages in the transformation process, demonstrating the precise control required for smooth transitions between operational modes.

Figure 5B presents force analysis graphs for both Tendon 1 and Tendon 2 during the morphological transformation process. The graphs show the force profiles in Newtons over 200 simulation steps, with different line styles representing Rod, Band, and Eye components. The force analysis reveals how the loads are distributed throughout the transformation, with numbered points 1, 2, 3, and 4 corresponding to the same transformation stages shown in Figure 5A. This analysis demonstrates the mechanical feasibility of the transformation and provides insight into the structural loads experienced by different components during reconfiguration.

The present application in fact discloses a robot able to drive on the ground (but also to swim in preferred embodiments) but also to reconfigure its shape from a rover configuration to :

- a ball or spherical configuration for freely rolling in a slope and/or protecting its components and/or escaping itself from an immobilizing environment ;
  and/or
- a flat unfolded configuration allowing it to fly as a copter.

The present description will thus detail both cases separately for showing their specific features, while it is clear that the preferred embodiments comprise the features enabling both these transitions. The following description will firstly detail the transition between rover and copter configurations, and then secondly detail the transition between the rover and ball configurations, but it will be understood that the details and variants or embodiments described in relation to features of one of these section of course can apply to the other section.

The compliant robot comprises a frame (1), a payload (2) with a control unit controlling locomoting wheels (3) for driving as a rover or swimming. This frame (1)is generally comprising at least two elastic rods each configured in the shape of a ring. While the preferred embodiment uses exactly two rings, alternative embodiments could employ three or more elastic rings to provide additional structural complexity or redundancy. The rings are preferably assembled together by short connectors (10) at which the rods cross each other and long connectors (11) on which locomoting wheels (3) are mounted.

Generally, the long connectors (11) allow mounting the locomoting wheels (3) and the propellers which are preferably on the same side as said wheels, with respect to the frame, such that the later can protect them both in most configurations. Alternative connector arrangements could include adjustable connectors or connectors with different geometric configurations while maintaining the crossing pattern. The frame preferably defines a repetitive eye-shape pattern around the circumference of the rings, with the two rods crossing each other at the short connectors and thereby alternatively forming the lower part and the upper part of eyes along this pattern. Alternative patterns could include modified eye shapes or varying eye sizes while maintaining the fundamental crossing principle. The long connectors (11) are preferably fixed along the center of the eyes of this pattern, while the short connectors (10) form the corners between adjacent eyes, though alternative positioning within the eye structure could be implemented.

The robot preferably comprises propellers (6) mounted on the long connectors, preferably mounted on the same side as the locomoting wheels (3). Alternative mounting arrangements could include offset positioning or adjustable mounting systems. The unfolding tendons (4u) are preferably each connected to both rods but each at only one of the lower and upper parts of the eyes, with at least two winches (5u) centered at two opposite short connectors (10) controlling the tendon lengths. Alternative tendon arrangements could include multiple tendons per section or different attachment point distributions. The number and location of winches and tendons can of course vary according to various embodiments, depending on the constraints or desires, for example according to the number of eyes in the eye-shaped pattern.

According to some embodiments, the connectors (10,11) are preferably rigid, though alternative embodiments could employ semi-flexible or adaptive connectors. The long connectors (11) preferably prevent at least the translation of the rods along their own axes, but alternative designs could allow controlled translation with limiting mechanisms. The short connectors (10) preferably retain the rods crossed while
allowing free translation and rotation along their own axis, though alternative embodiments could provide controlled or limited movement ranges. Such rotation of the rods in the shape of the ring can be designated as a poloidal rotation because each rod in fact forms kind of a tore (ring) and the rotation around its own axis thus corresponds to a poloidal rotation of the tore.

In some embodiments, the propeller engines preferably have shafts carrying propellers (6) with diameters smaller than the locomoting wheels (3). Alternative sizing relationships could include equal diameters or adjustable propeller sizes, provided mechanical interference is avoided during operation and transformation.

Preferred embodiments comprise wheels (3) with shafts having rotation axes colinear to the propeller rotation axes, driven by respective engines with differential speed and torque control. Alternative drive arrangements could include parallel axis systems, gear-coupled drives, or magnetic coupling systems while maintaining independent control capabilities.

The unfolding tendons (4u) preferably comprise Bowden cables attached to the rods at regular intervals, with cables running freely along the rods at connector levels. Alternative tendon systems could include wire rope assemblies, synthetic fiber cables, or pneumatic actuators, provided they maintain the required flexibility and control precision. The locomoting wheels (3) are preferably rimless, reducing weight and complexity. Alternative wheel designs could include partial rim structures, spoke-based designs, or adaptive rim systems that can be deployed when needed for specific terrain conditions.

The wheels preferably comprise branches (30) with extended surfaces orthogonal to branch movement. Alternative branch configurations could include adjustable surface areas, retractable extensions, or variable geometry branches that adapt to different terrain types or swimming conditions.

In some embodiments, the robot further comprises at least two curling tendons (4c) connected to diametrically opposed short connector pairs, controlled by respective curling winches (5c) at the payload (2). Alternative arrangements could include multiple curling tendon sets, non-diametric positioning, or distributed winch locations while maintaining the spherical transformation capability. The control unit preferably controls sequenced actuation by activating one winch to create an oblong shape, then driving a second winch along an orthogonal axis for spherical transformation. Alternative control sequences could include simultaneous actuation with different rates, multi-stage transformation with intermediate shapes, or adaptive sequencing based on environmental conditions.
shape, then driving a second winch along an orthogonal axis for spherical transformation. Alternative control sequences could include simultaneous actuation with different rates, multi-stage transformation with intermediate shapes, or adaptive sequencing based on environmental conditions.

In preferred embodiments concerning only the robot able to reconfigure from a rover configuration to a ball configuration, the connectors (10,11), which are generally rigid, prevent both translation and rotation of the rods of the frame, respectively along and around, their own axes. However, it is generally not mandatory that such movements are totally prevented because the robot's configurations described herein are in fact stable states of the elastic rods deformed under the action of the tendons. In fact, the only connectors for which it is really preferred that the translation is prevented are the long connectors because the locomotion modules (motorized wheels and propellers) are mounted thereon and their orientations impacts the locomotion skills of the robot, except in the freely rolling ball configuration but it's still preferred that the configuration is repeatable, for example to allow some adjustments of the equilibrium of the payload inside the frame to adjust the center of gravity and impact the trajectory of the robot.

It will be understood that the term curling here means that the robot frame is curling up (wraping itself or closing up) and that the spherical configuration is not perfectly spherical because of the structure of the robot and that the term spherical only concerns the general shape of the frame. Also, it will be understood that curling winches (5) connecting the curling tendons (4c) to the frame are preferably located at or around said payload such that the latter is suspended within the frame, for an optimal protection.

Generally, the robot comprises at least two curling tendons, each curling tendon (4c) being connected to the frame (1) in least a pair of locations, each location of a pair being diametrically opposed with respect to the center of the frame (1). Of course, it is possible to use two pairs of tendons, with each tendon of a pair pulling on one side of the frame and the other pulling on the other side, but this would require more winches and can be avoided by the fact that the tendons are for example tethers or cables sliding around the frame at the location of their connection to it (see below). Such connection can indeed comprise a loop enabling a stable position (i.e., without translation along the rods' axes) of the tendon on the frame, such that a single tendon pulled and released by a single winch can actuate both opposite sides of the frame. The same variations of number and locations may also apply to the curling tendons described above.

Preferably, said control unit controls the curling tendons (4c) such that a first tendon pulls on the frame (1) along a first axis more than at least a second tendon to obtain an oblong shape of the frame (1) in the flat rover configuration, which is deformed to the sphere configuration by actuation of at least a second tendon exerting a pulling force along a second axis mainly orthogonal to said first axis. It will be noted that the orthogonal axes of deformation of the frame allows in fact two flat rover configurations with orthogonal driving direction and able to fold as a sphere, which enables the robot to change its direction or mode of locomotion fast and conveniently. If more wheels than the four shown in the examples and more tendons are present, the robot may be able to switch between more direction, depending on the deformation of the frame applied by the tendons (which can be connected to the frame at the short connectors but also at the long ones, in more complex embodiments).

Generally, the locations at which the tendons are connected to the frame are at (or close to) the short connectors to impinge the shape regularly. Also, it should be noted that, in the flat rover configuration, the second tendon generally doesn't pull on the frame at all so that it remains generally flat, but other configurations are possible depending on the number of tendons and their locations on one of the rings or both, such that the term "flat" is not limiting in the present application and it can be used for the rover configuration which is only flat compared to the ball/sphere shape but not really flattened as the unfolded configuration.

Preferably, this robot is fabricated from elastic rods (for example fiberglass or any plastic or metal material sufficiently elastic and resistant for the reconfiguration detailed herein), connectors, and electrically driven winches and wheels, to form a meter-scale compliant robot. The robot structure leverages 'lens-like' structures (e.g., eye-shape pattern) to control the torsional stiffness, enabling the structure to reconfigure from a flat rover for driving to a spherical form with its wheels tucked inside. The term payload is used in the present application to designate the fact that the robot can be loaded with suitable elements for performing its functions, such as a processing or control unit for controlling the direction to which the robot moves, by actuating the wheels for moving in various directions and by actuating the winches for controlling the reconfiguration into a spherical shape. However, the term payload also means that the robot is able to support other loads such a battery for powering the components of the robot but also, for example, such as objects to be carried somewhere by the robot. In preferred embodiments, the control unit, the battery and the curling winches (5c) are all held on the central payload (2). As illustrated in the example of the figures, the robot comprises at least two tendons with directions orthogonal to each other, such as longitudinal tendons and transverse tendons. Although two tendons are enough, more tendons can be added. In addition, the transverse and longitudinal tendons preferably have a path on opposite faces of the payload, that is, one on each opposite faces of the ring (with the respect to the plane of the ring in the unfolded "flat rover" configuration) but other configurations with various locations of each tendon, for example with one tendon per location is of course possible, in particular depending on the chosen angle between each tendon (radially with respect to the center of the rings).

Generally, if the rod thickness is increased, the robot can carry more payload; but morphing into a ball requires more energy, respectively becomes infeasible because the rods break. Thus, the rod thickness and flexibility will be adapted to the skills desired and/or to the tasks to be performed by the robot, depending on the need of carrying load and necessary ability to move best over rough terrain. To enable the reconfiguration, there is a trade-off between frame compliance and payload capacity; higher stiffness supports heavier pay-loads but reduces compliance and increases the energy needed for morphing. The selected frame stiffness represents a compromise between these factors to support the 1.8kg payload while enabling robust locomotion and efficient morphing. For the two following, non-limiting, examples of configurations, the robot can transform nicely into a ball and move over rough terrain:

- Frame made of 2x 4m rods that are 5mm thick, i.e. robot diameter is ~1.3m, the suspended payload in the center can weigh around 2kg.
- Frame made of 2x 2m rods that are 3mm thick, i.e. robot diameter is ~0.6m, the suspended payload in the center can weight around 1.5kg.

In preferred embodiments, said connectors (10, 11) and rigid and prevent the rods of the frame (1) from translating and rotating along and around their own axes. In some embodiments, said wheels (3) are rimless. Indeed, rimless wheels prove to be efficient enough on solid ground but moreover to allow the robot to swim, as long as its payload is waterproof and floating in water (in addition to being hanging on the tendons).

Depending on various embodiments, the cross-section of the branches of the wheels may have a circular shape. However, further advantageous embodiments improve the swimming ability of robot by including branches having an extended surface in a direction orthogonal to the movement of the branches, for example as with a cross-section which is elliptic or have a shape of a rectangle or a square or a shape with a concave shape on one face, so as to enhance the surface of contact with water or liquids onto which the robot needs to swim. Indeed, the rover function doesn't require a specific shape of the wheels (which can even be rimless) while swimming is better achieved with an increased surface of contact between the branches and liquids.

In some embodiments, the curling winches allow relaxing the tendons quickly to enable the elastic rods induce a jump of the robot. Transitioning from spherical to rover shape using the robot's curling winches enables controlled stopping, however, this process takes a finite time, limiting the robot's response time to a stopping signal. When in spherical configuration, the elastic rods store potential energy, applied by the winches. Thus, exploiting for example clutches on the robot's winches enables a rapid release of the curling tendons, and the stored energy can be released explosively. This rapid release of energy when the robot is in a spherical configuration leads to a jumping behavior of the robot. The curling winches preferably allow quick tendon relaxation from spherical to flat rover configuration for elastic jumping. Alternative release mechanisms could include staged release systems, controlled deceleration mechanisms, or energy storage systems that enhance the jumping capability while maintaining safe operation. In some examples of robots, heights of 0.5m can be reached in less than 0.3 seconds. This can offer an effective escape maneuver to overcome obstacles or other challenging settings, or enable a more immediate halt. If the robot is in a partially spherical configuration, for example, during the progressive release of the tendons' pulling tension, this quick release can still be effective in stopping and/or jumping the robot. Quick release of the unfloding tendon (the inner tendon actually) is also an option but it's only useful in rare situations for getting unstuck by a transversal expansion. However, since many configurations with various numbers of winches and corresponding tendons are also included in some embodiments, it is clear that various movements can be achieved, thereby improving the robot's skills to autonomously navigate in most environments.

In a general manner, the compliance of the robot is achieved by designing the energetics of the structure appropriately and ensuring that the reconfiguration space avoids undesirable twisting or buckling modes. The continuous reconfiguration space of the robot enables rapid online adaptation for different modes of locomotion including driving, swimming, and rolling.

The robot according to the invention proved to be able to traverse complex terrains including mountainous, aquatic, and urban ones. The robot's passive properties vary from highly compliant and adaptive in its flat configuration, enabling locomotion through adaptation to the terrain, to elastic and robust in the spherical configuration, resulting in robust rolling, falling, and dropping behaviors.

By adapting its configuration and passive properties to the environment, the robot shows greater physical robustness and simplifies autonomy, enabling it to navigate autonomously with only position information.

The robot is configured for an active reconfiguration from a driving wheeled configuration into a spherical form. To achieve this, the robot's frame is fabricated from two elastic rings (for example in fiberglass or plastic or metal preferably nonoxidizing), which are connected to form a circular structure with a woven pattern.

The reconfiguration is obtained by motorized tensors, called tendons, for example formed by tethers or cables pulled and released by winches and acting on the elastic rings. Such Tendons span across the frame and are connected to a payload in the center of the robot. This payload is thus 'floating' at the center of the robot as it is hanging on the tendons linked to the surrounding frame. The tensions can for example be obtained by electric winches at the payload. In some embodiments, as illustrated in the figures, there are only two tendons, each expanding between two diametrically opposed locations of the rings, the two tendons span orthogonally to each other. However, as mentioned above, the tendons may be arranged in pairs or there can be more tendons which span radially from the center to the periphery of the ring, as long as a first tension force applied by the tendons allows, firstly, the rover configuration, preferably at least two rovers configuration with non-parallel driving direction and, secondly, a reconfiguration in sphere thanks to a second tension force substantially orthogonal to the first tension force.

This enables the frame of the robot to deform three-dimensionally and assume a spherical shape, while not twisting or buckling. Furthermore, the design of the frame must support reconfiguration in a way that allows control of the orientation and tucking of the wheels inwards to form a fully spherical shape without the wheels protruding outside the sphere.

By controlling the winch-driven tendons in a given actuation sequence, the robot is able to alter its shape in-plane for efficient and robust locomotion, and out-of-plane to compactly reconfigure into a sphere. In its spherical configuration, the payload is centrally suspended within the robot, and the wheels are folded inward towards the center of the robot.

The woven pattern of the elastic rods that form the robot's frame is advantageous in that it achieves stable and unambiguous reconfiguration. Indeed, only the configuration of the eye-shaped (e.g., multi-lenses) frame is efficient for such compliant reconfiguration. Using finite element analysis, the deformation profiles, stability, and tendon forces can be predicted for different frame designs. To model the elastic rods that undergo large deformation, a modeling method based on absolute nodal coordinates formulation (ANCF) has been developed to offer accurate prediction of the 3D deformation while being computationally efficient. Results of such simulations are shown on figure 5A illustrating the actuation of the tendons. Alongside the 3D deformation, this adapted ANCF methods enable estimation of the flexural rigidity, torsional rigidity, and the elastic potential energy. This enables the nominal energy density distributed throughout the frame to be computed, which indicates the extent of the energy stored in different configurations. Figure 5B illustrates the forces in each tendon and thus the energy stored in, and during transition between, these configurations.

Using this analysis and the estimation of the deformation, we can determine the effects of morphing capabilities for different frame designs, to demonstrate the importance of the woven lens shape of the frame. For the same winch placement and tendon routing, but with a ring made of a single rod, the frame structure exhibits stable in-plane and three-dimensional, out-of-plane reconfiguration at low tendon forces, but as the single rod is free to rotate around its toroidal (central)axis, the wheel orientation is not constrained. Therefore, the wheels are not folded away when reconfiguring into a sphere. To constrain the wheel orientation during reconfiguration, the frame may be designed as a band structure comprised of two elastic rings rigidly connected with constant separation. This configuration demands considerably higher tendon forces for reconfiguration. In addition, during out-of-plane deformation, this band structure tends to become unstable, leading to a flipping of the band, which obstructs complete reconfiguration.

The present description and especially the following paragraphs refer to non-limiting examples of tests performed on some configurations of the robot as described above, for example in terms of size, shape, weight or intrinsic properties, but these details should not be considered as limiting the invention since they mainly are proofs of the skills of the robot and its compliance.

The frame of the robot is constructed from two fiberglass rings, interconnected to form a pattern of four symmetric, convex lenses between them. The wheels are positioned at the center of these lenses. During reconfiguration, this structure requires similarly low tendon forces as observed in the single ring structure. In contrast to the band structure, it allows the frame to fully and unambiguously reconfigure into a sphere. Additionally, the orientation of the wheels is constrained, ensuring that as the frame folds into a spherical shape, the wheels face towards the robot's center. The frame of the robot allows for continuous reconfiguration, with the possible reconfiguration space defined by the length of the two winch-operated tendons. Certain tendon configurations in this reconfiguration space can lead to a twisting of the frame. By examining the torsion stiffness of the pivot point of the reconfiguring frame, we can identify the likelihood of unconstrained, unstable, and undesired twisting motion. This metric can be computed systematically across the reconfiguration space. When torsion stiffness is below zero, these structures show unwanted and unstable twisting behaviors.

Within the 'safe' reconfiguration space, there exist three regions. First, in the outer region of the tendon reconfiguration space, in-plane reconfiguration occurs. This reflects changing from a circular shape to a rover shape suitable for driving or one that fits through gaps. Second, when the tendon lengths are further reduced, out-of-plane reconfiguration occurs. The wheels of the robot lift off the ground and are folded in while the frame takes on a spherical shape. This continues until the frame is fully reconfigured into a spherical shape. Finally, there is the unstable 'twisting' region which must be avoided. When switching between different configurations, a path of tendon configurations must be chosen that avoids unstable regions. Finally, when keeping the total length of both tendons constant, the payload suspended in the robot's center can be moved independently of the robot's frame. This arrangement enables the initiation of a rolling motion by moving the center of mass of the robot without altering the overall configuration.

The robot's two main configurations, namely the spherical and rover shape, allow different forms of locomotion. The robot exploits each configuration's specific passive properties to be resilient and robust in different environments. In this section, we illustrate these passive properties and how they are key to enabling autonomous navigation in the robot's two main configurations.

In its flat configuration, the robot leverages compliance in its frame to overcome obstacles. The robot can overcome obstacles that are 14% higher than its center of mass with a success rate of 38%. Further, the compliance in the frame aids in traversing narrow gaps. The robot passively compresses to fit through openings smaller than its width, successfully passing through them if it has adequate traction and forward momentum. To evaluate this ability, the success rate for the robot passing through gaps of reducing size was evaluated. This demonstrated that the robot can successfully squeeze through gaps more than 10% smaller than its starting frame width.

In its rover configuration, the robot's compliant frame enables it to robustly maneuver in diverse environments, overcoming obstacles like steps and driving on varying slopes and surfaces. This means that the robot does not require detailed terrain analysis or complex path planning, but can leverage onboard state estimation to navigate between waypoints. Using measurements from onboard sensors (GNSS-based position sensor, inertial measurement unit (IMU)) to provide a robust estimation of its location and heading, the rover can autonomously follow a set of predefined waypoints, where a low-level path-following controller enables navigation between them. This enables the robot to autonomously traverse complex and varied terrains, as shown by the 307m path followed in Fig. 3c, where the robot autonomously follows 8 predefined waypoints. The low-level autonomous and physical compliance of the robot enable it to traverse over various challenging terrains with minimal planning. Furthermore, the planning and low-level control algorithms do not need to be specific for different terrains or topographies.

The spherical configuration of the robot enables it to cover diverse and challenging terrains, which could include significant drops, for example, from cliffs. As the payload is suspended centrally within the frame, the spherical configuration provides not only physical robustness to the robot frame, but also protects the easily damaged payload of the robot. When the robot is dropped from a height, the frame elastically absorbs the impact forces and gradually dissipates them. Initially, it deforms, before the elastic deformation in the frame leads to the robot bouncing and restoring its initial configuration. This process effectively protects both the payload and the frame from damage. To demonstrate the effectiveness of the spherical configuration, we compare the energy that is dissipated upon impact by the robot in the spherical configuration to that in the flat rover configuration. This is measured by observing the rebound height of the robot following drops from varying heights using motion capture. In the rover configuration, impact energy is dissipated by both the robot's frame and the payload upon hitting the ground. In contrast, in the spherical configuration, a portion of the kinetic energy is converted into elastic deformation upon impact, resulting in significantly less energy being absorbed by the frame and none by the payload. This effectively shields the payload, as all the energy is dissipated by the frame. While the impact energy to be dissipated increases linearly with drop height, the spherical configuration's elastic deformation reduces the total energy that must be dissipated upon impact by the frame by approximately half compared to the rover configuration.

The robot's ability for efficient and gradual energy dissipation in the spherical configuration enables the robot to undergo significant drops when rolling without damage, including drops of over 10 meters. When planning a route for the robot in this configuration, this means extreme features such as cliffs or drops do not need to be avoided but can be leveraged to offer an optimally efficient path.

This physical robustness allows the spherical form to be exploited for rolling. Rolling can be self-instigated by the robot, after which the robot follows the gradient 'autonomously', performing 'environmental computation'. While the path followed depends on the terrain and topology, significant distances can be traveled. The rolling capabilities were tested in a snow-covered mountain environment. Rolling was instigated in the same location, and the rolled trajectories were recorded for three repeats. While rolling, the robot reached velocities up to 6 m/s. In two instances, the robot covered a distance of 1.4 km.

During the top part, when rolling along a mountain ridge, the trajectories diverge but converge to the same endpoint due to the topographic features of the surrounding terrain. Note that it was not intended for the robot to end up in the same location for the rolled trajectories, but to capture the possible variability when rolling in a complex terrain.

In one other case, the robot rolled to a local topographic minimum and ended in another location. Thus, when rolling 'autonomously', the robot can follow a gradient and terrain-driven path which can be beneficial for rapidly and efficiently descending slopes.

In addition to the robot exploiting its passive properties in different configurations, to simplify autonomy and provide different means of locomotion, the robot can also exploit reconfiguration to adapt to the environment or achieve new modalities of locomotion.

When in its flat configuration, its wheels are in contact with the ground, and it can drive. Within this configuration, the length of the two orthogonal tendons can be varied to change the aspect ratio of the robot from a circle (aspect ratio, $r = l1/l2 = 1$) to a narrow figure-of-eight form (r=6.5). The robot's aspect ratio affects the achievable speed and drift when driving and turning. This was evaluated by recording the trajectories for forward driving and turning when the robot was in different aspect ratios. The fastest speed (1.4m/s) is achieved when the aspect ratio is such that the wheels are aligned with the direction of travel, for an aspect ratio between 2 and 3. The speed then decreases with the two extremes of aspect ratios. The positional error, or percentage drift when moving forward shows a similar relationship, with the best performance (i.e. lowest positional error) seen when the wheels are aligned with the direction of travel (r=2.2). When turning, the angular velocity is highest when r=1 and the robot is closest to a circle. As the ratio increases, it is increasingly difficult for the robot to turn. Eventually, turning is impossible when the wheels are turned inwards, as for r=6.4. The turning ratio similarly increases with aspect ratio. A tendon ratio of 1.4-2.2 offers a compromise in terms of forwards speed, and ease of turning. However, depending on the path of the robot, and the turning radius required, morphing within the flat configuration can aid in speed, controllability, and maneuverability of the robot.

When in the spherical configuration, the payload of the robot is suspended on the tendons within the robot. By maintaining the same total tendon length, but varying the ratio between tendon 1 and 2, the payload can be moved along the suspending tendons while maintaining the identical spherical configuration of the robot. As the payload is significant with respect to the lightweight frame, this can be used to move the center of mass outside the support polygon of the robot and instigate rolling motion. Using the encoders on the winches, this operation is automated and takes less than 15 seconds. Using motion capture, the rolling motion of the sphere can be seen for repeated trials on flat ground. The direction of rolling is determined by the motion of the payload. Rolling distance and path are approximately constant, corresponding to half the circumference of the robot. The ability to shift its center of mass enables rolling to be automatically initiated on flat, or close-to-flat slopes.

After instigating rolling, reconfiguring to a rover enables control over the distance traveled. To illustrate the repeatability of this process, for two different starting points on a grassy slope, reconfiguration from sphere to rover was instigated after a given time to reach two target goal positions. Although there is some variation, a repeatability of $\pm 2$ meters is observed. The robot's ability to actively stop rolling through morphological reconfiguration enables the integration of controlled rolling as a locomotion modality into autonomous navigation strategies.

The robot's capacity for active morphological reconfiguration enables the combination of its different locomotion modalities for efficient autonomous navigation. Three navigation strategies were considered as a means of reaching a target location mid-hill: driving directly to the target, rolling until passively stopping followed by driving to the target, and rolling, actively reconfiguring to rover when at the same height as the goal, and driving to the goal. Note that our path planning algorithm does not have prior information about the surrounding terrain available. The navigation strategies were evaluated based on the robot's ability to reach a target location on a grassy slope. For each strategy, metrics including the path taken, time elapsed, and energy consumption were measured. Driving directly to the target results in the shortest overall path of 22m. In comparison, rolling down until naturally stopping and consecutively driving uphill towards the goal, results in a path 2.5 times longer than driving directly and requires significantly more time and energy than the other strategies. Note that the surplus of energy is required because driving uphill consumes more energy than downhill. Rolling, actively stopping by reconfiguring to rover and driving towards the goal, takes less time than the other strategies despite the distance traveled being slightly larger than driving directly. Critically, we observe that the combination of rolling, active reconfiguration, and driving reduces energy consumption by a factor of four in comparison to driving directly. This demonstrates how the robot's ability for active reconfiguration allows it to leverage the advantages of each configuration to increase navigation efficiency.

By exploiting the robot's reconfiguration capabilities appropriately, the robot can operate in and transition between diverse natural environments. Two examples of real-world deployment scenarios are shown, demonstrating how morphological reconfiguration facilitates seamless access and maneuverability in various environmental contexts.

Transitioning from locomotion on land to surface swimming in water and traversing rocky terrain is challenging, due to the different locomotion modes required and the obstacles present. The robot's ability to operate in these environments was tested on a lake front of Lake Geneva in Lausanne, with a sandy, stony beach cluttered with flotsam and a surrounding wall of boulders. The robot starts driving on the beach, heading to an initial waypoint in the water, followed by returning to the beach and finally to reach the goal position traversing a wall of boulders. We combine a mix of autonomous and teleoperated operation. Using the same controllers for path following, the robot can automatically transition from a beach to a lake. Leveraging its wheels to generate thrust, it can swim and reach a specified waypoint. In water, the robot shows maneuverability leveraging its four-wheel differential drive. Its velocity in water is constant at 0.5m/s, a comparable speed to locomotion on land. However, the power consumption when swimming is 56% lower, and is far more consistent. The robot can autonomously transition from water to land, leveraging its open wheel structure. The third terrain to traverse is a wall of boulders. Although the robot can gain some traction to move over and among the boulders, it gets stuck. To get unstuck, overcome the boulders, and return to the lake, the robot was commanded to automatically take on its spherical shape and rolls back into the lake. Back floating, the robot switches back to its rover configuration and swims to the final goal location in the lake. The total distance traveled is 70m whereby the robot is covering 40m swimming, 25m driving, and 5m rolling. The robot's compliance facilitates seamless navigation across varied terrains and smooth transitions between them, while its capacity for active morphological reconfiguration allows it to effectively overcome obstacles.

The robot was deployed in the varied mountainous landscape, tasked with traversing snow-covered slopes, rugged mountains, streams, and rivers to reach a destination 4.5km away from its starting location. This scenario required the robot to engage in driving, rolling, and swimming locomotion. The robot was partially teleoperated and partially autonomous on this path, operated with a single battery charge, and changed its configuration three times. For the first section of the path, a steep slope, the robot rolled down the slope in its spherical configuration, reaching speeds up to 4m/s, the ability to follow the environment enabled a meaningful path to be autonomously followed by the robot. During these ten minutes of rolling, the only energy consumed was by the robot's onboard computer, which captured data and ran the robot's software stack. This offered a reduction by almost 90% in power consumption compared to its driving configuration. In the following 1.8km long flat section, the robot automatically transitioned into its rover configuration and autonomously followed a series of commanded waypoints. The robot drove up to 2.3m/s while consuming on average 39 Watt. When reaching a second steeper part, the robot was commanded to reconfigure back into a sphere and leverages its energy efficient rolling mode. During this experiment over 4.5km of distance was covered and around 1000m of height was descended. Over this 4.5km traverse the robot did not experience any failures nor did it get irrecoverably stuck. Finally, a river flow was leveraged to reach the final destination. The robot reconfigured into a rover to enter the stream, after which it exploits the river flow, requiring minimal power to reach its goal location. Through reconfiguring the robot can exploit the environment for control and minimize energy consumption.

The performance of the robot can be compared to other robots designated for operating across diverse outdoor environments using several metrics. The compliance of this robot enables to call it GOAT (Good Over All Terrains), since it is able to traverse complex terrains including mountainous, aquatic, and urban ones. We first focus on key metrics for terrestrial locomotion. These include efficiency metrics, such as the cost of transport, total weight, and distance per charge, and performance metrics which reflect outdoor behavior including the maximum slope that can be ascended, maximum drop height, maximum velocity on flat ground, and the payload capacity. Further, we compare performance and efficiency metrics for locomotion in aquatic environments, such as distance per charge, cost of transport, maximum velocity where possible. The energy efficiency of GOAT, as represented by its cost of transport (CoT), is higher when compared to other robots for terrestrial locomotion. The rolling locomotion mode, when rolling downhill, showcases GOAT's efficiency, being 10 times more efficient than A robot of the prior art, 26 times more efficient than M4, and 100 times more efficient than ART. In its driving configuration, the GOAT's CoT is around 30% lower than A robot of the prior art's. The GOAT weighs one-tenth of A robot of the prior art and can carry lower loads than A robot of the prior art, the only robot for which the payload capacity is reported in the literature.

In aquatic environments, the GOAT robot's cost of transport is 3.3 times lower than ART's most efficient mode, while A robot of the prior art and M4 are infeasible for aquatic locomotion. In terms of distance covered on a single charge, the GOAT demonstrates 4.5km, similar to the A robot of the prior art robot covering 2.2 km, and M4's estimated maximum range of 2.4km. The GOAT robot can swim up to 2km per charge, while ART is operated tethered. For terrestrial locomotion, the GOAT robot reaches a competitive maximum slope ascending capability of 33 degrees compared to A robot of the prior art's 21 degrees and the thruster-assisted M4's 45 degrees. It achieves a maximum velocity of 2.4 m/s while driving, twice that of A robot of the prior art's reported 1.2 m/s and is robust to drops exceeding 10 meters. The GOAT robot's maximum swimming velocity of 1.2 m/s is substantially higher than ART's 0.09 m/s. Diverse environmental adaptation strategies are employed by the compared robots: A robot of the prior art relies on precise sensing, planning, and control algorithms; M4 exhibits locomotion plasticity and has the capability to fly for short periods; ART applies adaptive morphogenesis for transitioning between land and water. Our robot optimizes navigation and energy usage through coordinated interactions with its environment by exploiting the passive properties of its compliant structure and actively reconfiguring its morphology under the influence of environmental stimuli.

The present application presents a robot that is capable of active morphological reconfiguration and passively adapting to its environment. This bio-inspired morphological reconfiguration enables different locomotion modalities including driving, swimming, and rolling. The compliance of the robot's structure offers local adaptation to obstacles in highly unstructured and uncertain environments, such that complex terrains can be covered with minimal sensing and path planning autonomously. Furthermore, in different morphological configurations, the efficiency, feasible paths, and velocity of the robot are varied, opening up a wider range of environments and terrains for navigation. In doing so, with GOAT, we demonstrated unprecedented distances of efficient travel, across many different challenging terrains. The integration of active reconfiguration with structural compliance, as demonstrated in this work, offers the potential to significantly enhance the ability of future robots to efficiently and autonomously navigate complex and challenging environments.

Technical details of preferred but non-limiting embodiments are detailed below for the example of 2 tendons actuating the frame at 4 locations defining two orthogonal tension axes and only 4 wheels interposed between these locations, but as mentioned above, more complex configuration can be provided.

The robot's frame is constructed from four straight fiberglass rods, each two meters in length and 5 mm in diameter. Fiberglass rods provide a high strength-to-weight ratio and can show significant elastic deformation before permanent deformation or breakage occurs. The fiberglass rods are rigidly connected to form two fiberglass rings with a circumference of four meters each. The two circles are stacked and connected at eight equidistant points on the circumference of each circle. Four of these joints (called short connectors above) connect both of the circles with an angle between the two circles, serving as mounting points for tendons and enabling the structure to bend and fold. Four others (called long connectors above) are rigid connections and enforce the convex, symmetrical lens structure that allows unambiguous morphological reconfiguration into a sphere and provide mounting points for the wheels. Each rigid connector is composed of two chevrons, the ends of which are attached to both circles using fixed T-joints. Each chevron is formed by two 8cm long fiberglass rods that are connected in the middle by a fixed 3d printed connector with an opening angle of 120 degrees. This combination of rigid connections enforcing geometry in the frame enables morphological reconfiguration.

Four motors are mounted to the fixed middle joints of each rigid connector's chevrons. The motors are waterproof and can supply 45kg cm-1 of torque. Each motor drives a rimless wheel, which is fabricated from a central 3d-printed hub that holds 10 spokes. The spokes are 25cm long and made from 8mm thick fiberglass rods. The number and stiffness of the spokes were chosen heuristically, with 10 relatively stiff spokes providing a good balance between smooth motion and traction across various terrains. The spoke length is chosen to be as large as possible without intersecting or touching the robot's frame when rotating.

A waterproof payload in the middle of the frame is connected to the frame of the robot by two tendons from 0.6mm polyethylene braided fishing line. The tendons span orthogonally over the frame with one tendon running above and the other below the central payload. Each tendon is guided from the central payload through an eyelet on one connector of the robot frame to an eyelet on the diametrically opposite connector and back to the central payload, where they are connected to two electric winches. These two winches can each produce 40kg cm-1 of torque and enable the lengths of each of the tendons to be independently controlled. Both winches were retrofitted with encoders to measure the absolute angular position of their spools. Under slight tension, the two tendons hold the payload of the robot in its center. Under higher tension, the tendons cause the robot's frame to deform. This property is key to enabling the robot to actively reconfigure its morphology.

All actuators, sensors, computing, and power electronics, except the motors that drive the robot's four wheels, are housed within the robot's central payload. The central payload serves as a hub for both power and data communication. The wheel motors receive their power through cable conduits running from this central payload. These conduits extend from the motors, running along the robot's frame and tendons, and converge at the central payload. The robot's actuation system consists of its four-wheel motors and the two winch motors. All motors are compatible with direct power supply from 3S LiPo batteries. Typically, the robot is powered with a 1600mAh 3 S LiPo battery, as this battery provides a good trade-off between the robot's designated operation period, i.e., approximately 30 minutes of continuous driving or 2 hours of rolling, and operational weight. Power management, crucial for the robot's functionality, is handled by a Holybro PM02D power module. This board regulates the battery's output, stepping down the voltage from 12V to 5V, ensuring efficient energy distribution to power the robot's central processing unit and its sensors.

The robot's central processing unit, a Raspberry Pi 5 (8GB), establishes connectivity with various peripheral electronics essential for operation via the Inter-Integrated Circuit (I2C) protocol. This includes an Adafruit PCA9685 16 Channel PWM/Servo driver, which generates Pulse Width Modulation (PWM) signals for controlling the robot's winches and motors. Angular measurements of the winches are captured by two AMS AS5048B rotary position sensors. Precise acceleration, angular rate, and magnetic field measurements are obtained by an Adafruit LSM6DSOX + LIS3MDL 9-DoF IMU. Finally, a Texas Instruments INA220 current and power monitor, which is integrated into the power module, tracks the robot's power consumption metrics. For high-precision location tracking, the system integrates a Septentrio MosaicHat, connected to a lightweight ArduSimple Helical GNSS Tripleband + L-band antenna. This setup enables the acquisition of GNSS measurements at a rate of 100Hz. Real-Time Kinematic (RTK) corrections are streamed over the GSM network from the swipos-GIS/GEO service, enabling localization with sub-centimeter precision. The Raspberry Pi connects to the GSM network via a Wi-Fi connection to a TP-Link M7650 Mobile Wi-Fi, which is likewise housed in the robot's payload.

Automatic control is implemented to control the robot's electric winches and wheel motors to enable teleoperation, autonomous morphological reconfiguration, and navigation.

The electric winches control the tendon lengths. A cascaded control scheme is applied to vary the tendon lengths and allow for controlled reconfiguration of the robot's morphology to either take on a spherical shape or a shape suitable for driving. The length of each tendon can be controlled individually to follow a set reference length. A proportional gain controller is implemented to control the current tendon lengths lest,n to follow the reference length, Iref,n,

$$u_{motor,n} = P_{gain} * (l_{ref,n} - \hat{l}_n) \text{ with } n \in [1, 2].$$

The controller's gain, Pgain, is determined experimentally. When a tuple of reference lengths, Tref := (Iref, 1, Iref,2), is given to the winch controllers, both winches control the tendons to the respective reference lengths independently. For automatic morphological reconfiguration, a trajectory controller is implemented that enables synchronized control of both tendons. The morphological trajectory controller takes as input a morphological reconfiguration trajectory consisting of a series of tuples of K reference lengths, Tref,1....Tref,K. Each tuple is commanded to the low-level tendon controllers sequentially by the trajectory controller, whereby consecutive tuples are executed only if the prior tuple has been successfully reached. The execution of these morphological trajectories allows precise control of the robot's morphological state and enables the automatic execution of the morphing trajectories in the robot's morphological reconfiguration space.

Two morphological states of the robot and the transition between these states are of particular interest as they enable the robot to navigate efficiently and robustly in outdoor environments. These states are a) its flat configuration, which enables the robot to drive using its wheels and b) its spherical, curled up shape in which the robot's payload and wheels are protected, and it is able to roll. These configurations are indicated in the morphological reconfiguration diagram in Figures 2 (A to C) by markers, 2 (rover configuration), and 4 (spherical configuration). In order to transition from flat to spherical configuration and vice versa, a morphological trajectory that steers the tendons through an intermediate configuration, point 3 in the diagram, is introduced in order to ensure stable morphological reconfiguration and avoid twisting of the robot, i.e. avoid blue areas in the diagram in Fig. 2. Note that the morphological reconfiguration from rover to spherical shape is only one of the robot's features enabled by the morphological trajectory controller. Further morphological reconfigurations include in-plane reconfiguration such as elongation of the robot's frame which makes it more suitable for fast forward motion or to a more circular shape suitable for efficient and stable turning. Finally, the morphology controller allows the robot to change its center of gravity when in a spherical (and almost spherical) shape by altering the position of the payload suspended in the robot's frame. The payload makes up nearly two thirds of the robot's mass, so changing its location inside the robot's frame shifts the robot's center of gravity outside its support polygon, initiating rolling motion even on flat ground.

In its flat configuration, the robot resembles a four-wheeled, skid-steered, mobile robot whose movement and direction is controllable by differentially driving the wheels on either side of the robot, whereby the left and right side of the robot can be defined as the robot's frame and wheels which are located to the left and right side of the longer tendon. The wheels on each side move at the same speed. When the wheels on both sides are driven at the same speed and direction, the robot moves forward or backward in a straight line. Steering is achieved by varying the relative speeds of the wheels on either side, causing the robot to skid or slide as it turns. To control the skid-steered robot, input linear velocity, v, and angular velocity, $\omega$, are translated into wheel velocities by a low-level driving controller which effectively converts the desired motion into differential wheel speeds, enabling precise maneuvering of the robot.

The robot can be operated remotely and autonomously. Remote control is facilitated through a Sony Dualshock PS4 gamepad, which wirelessly connects to the robot's Raspberry Pi via Bluetooth. For autonomous navigation, the robot leverages its morphological reconfiguration capability to alternate between rolling and driving modes. We have augmented traditional navigation techniques with innovative strategies to fully utilize this feature. On slopes, rolling is preferred for its safety and energy efficiency. Hence, it is favorable for the robot to curl up and roll where feasible, only reverting to its rover configuration when rolling becomes impractical to reach its destination.

Three distinct navigation strategies were implemented using a ROS 2 Navigation2 (Nav2) framework to autonomously move towards predefined waypoints. Nav2 is a production-grade navigation framework designed for building highly reliable autonomous systems. For each navigation strategy, a high-level path planning algorithm is continuously computing the shortest path between the robot's current location and a target waypoint. Once a path is planned, a low-level controller computes motor commands to follow the planned path using a Dynamic Window Approach. The controller uses feedback from the robot's sensors to dynamically adjust the robot's speed and direction. The implemented navigation strategies differ in the integration of different high-level behaviors.

The three implemented navigation strategies are:

1. Basic navigation: The basic navigation strategy uses the default navigation behavior for skid-steered rovers implemented in Nav2. Note that for simplicity, recovery strategies as navigational behavior were disabled.

2. Reflexive approach: The second implemented strategy combines rolling and driving. Wherever rolling is possible, the robot changes to its spherical configuration and starts rolling until it stops automatically, either due to an obstacle or upon reaching flat ground. It then morphs to its rover configuration and drives towards the goal.

3. Trajectory-informed strategy: The third strategy incorporates information about the robot's prior trajectory. When rolling is feasible, the robot reconfigures into a sphere and rolls towards the target waypoint. It actively stops rolling and unfolds when closest to its destination.

The present application describes various technical features and advantages with reference to the figures and/or to various embodiments. Those skilled in the art will understand that the technical features of a given embodiment can indeed be combined with features of one or more other embodiment(s) unless the reverse is explicitly mentioned, or these characteristics are incompatible or the combination does not work. In addition, the technical features described in a given embodiment can be isolated from the other features of this mode unless the reverse is explicitly mentioned, in particular because the functional considerations provided in the present application will provide a sufficient explanation so that the structural adaptations possibly necessary are within the reach of those skilled in the art. Therefore, the embodiments described in the present application should be considered by way of illustration and the invention should not be limited to the details given above.

**Claims**

1. A compliant robot comprising a frame (1) with at least two elastic rods each configured in the shape of a ring, both rings being assembled together by short connectors (10) at which the rods cross each other and long connectors (11) on which locomoting wheels (3) are mounted, thereby defining a repetitive eye-shape pattern around the circumference of the rings, wherein propellers (6) are also mounted on said long connectors on the same side as the locomoting wheels and wherein at least two unfolding tendons (4u) are each connected to both rods but each at only one of the lower and upper parts of the eyes, such that at least two winches (5u) centered at two opposite short connectors each control the length of one of the upper or lower unfolding tendons, which are both controlled by a control unit to continuously and progressively deform and alter the robot's shape between a rover configuration with the eye-shape pattern enabling the control unit to drive the robot through the locomoting wheels, and an unfolded configuration in which the upper parts of the rods, released by the upper tendon, become outer parts by laying outside the lower parts of the rods thereby becoming inner parts, by being constrained by the lower tendon, such that the locomoting wheels and propellers rest in an upper side of the plane passing through the outer and inner parts of the rods, with propeller engines controlled by the control unit for enabling the robot to fly in the unfolded configuration.

2. The compliant robot according to claim 1, wherein the connectors (10,11) are rigid and the long connectors (11) preferably prevent at least the translation of the rods of the frame along their own axes, while the short connectors (10) retain the rods crossed relative to each other while allowing a free translation along their own axis and a free rotation around their own axis.

3. The compliant robot according to claim 1 or 2, wherein the propeller engines each have a shaft carrying a propeller (6) which has a diameter smaller than the diameter of the locomoting wheels (3).

4. The compliant robot according to any of claims 1 to 3, wherein said wheels (3) each comprise a shaft which rotation axis is colinear to the rotation axis of the propeller (6), these shafts being driven by respective engines controlled to rotate the propeller and/or wheel at different speeds with different torques by said control unit.

5. The compliant robot according to any of claims 1 to 4, wherein the unfolding tendons (4u) comprise Bowden cables attached to the rods at regular intervals along the frame, wherein the cables are running freely along the rods at the level of the connectors.

6. The compliant robot according to any of claims 1 to 5, wherein the locomoting wheels (3) are rimless.

7. The compliant robot according to any of claims 1 to 6, wherein the wheels comprise branches (30) having an extended surface in a direction orthogonal to the movement of the branches.

8. The compliant robot according to any of claims 1 to 7, further comprising at least two curling tendons (4c), each of which being connected to the frame at a pair of short connectors diametrically opposed with respect to the center of the frame, each curling tendon having a variable length imposed by a respective curling winch (5c) located at the payload and controlled by the control unit, with sequenced actuation of these curling tendons by their winches enabling the control unit to continuously and progressively deform and alter the robot's frame shape between the eye-shaped rover configuration and a sphere configuration that protects the wheels, propellers and payload.

9. The compliant robot according to claim 8, wherein the control unit controls the sequenced actuation of the curling tendons by first driving one winch such that a first curling tendon (4c) pulls on the frame along a first axis more than at least a second curling tendon to obtain an oblong shape of the frame in the eye-shaped rover configuration, which is subsequently deformed to a sphere configuration by driving a second winch for actuation of the second curling tendon (4c) exerting a pulling force along a second axis mainly orthogonal to the first axis, thereby curling the oblong shape into a spherical shape of the frame wrapping up the wheels, propellers and payload.

10. The compliant robot according to claim 8 or 9, wherein the curling winches allow relaxing the curling tendons quickly from an at least partially spherical configuration to said flat rover configuration, to enable the elastic rods to induce a jump of the robot.

**Fig. 1**

**Fig. 2A**

Upper/Outer Tendon
Lower/Inner Tendon

Tendon length

upright ⟶ flat
Eye-shaped          unfolded

**Fig. 2B**

**Fig. 2C**

## Fig. 3A

## Fig. 3B

**Fig. 4A**

**Fig. 4B**

**Fig. 4C**

**Fig. 4D**

**Fig. 5A**

Tendon control

**Fig. 5B**

| | Europäisches Patentamt |  | **Application Number** |
|---|---|---|---|
| | European Patent Office | **EUROPEAN SEARCH REPORT** | |
| | Office européen des brevets | | **EP 25 19 5553** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | Global Update: "This GOAT Robot Gets Through Any Terrain by Changing Shape!", , 28 February 2025 (2025-02-28), XP093347344, Retrieved from the Internet: URL:https://www.youtube.com/watch?v=TWGzRgQs5IE [retrieved on 2025-12-15] * the whole document * ----- | 1-10 | INV. B62D57/02 B60F5/02 B64U10/70 |
| A | US 2023/150660 A1 (RAMEZANI ALIREZA [US] ET AL) 18 May 2023 (2023-05-18) * abstract; figures 1A-1H,2A-2C, 3A-3C * ----- | 1-10 | |
| A | CN 106 240 262 A (GUANGZHOU LIGHT IND SCHOOL) 21 December 2016 (2016-12-21) * abstract; figures 1-5 * ----- | 1-10 | |
| A | CN 114 589 686 B (UNIV SHANDONG) 10 October 2023 (2023-10-10) * abstract; figures 1,5,6,7 * ----- | 1-10 | TECHNICAL FIELDS SEARCHED (IPC) |
| A | LU LU ET AL: "Multiple equilibrium states of a curved-sided hexagram: Part II-Transitions between states", ARXIV.ORG, CORNELL UNIVERSITY LIBRARY, 201 OLIN LIBRARY CORNELL UNIVERSITY ITHACA, NY 14853, 13 July 2023 (2023-07-13), XP091941726, DOI: 10.1016/J.JMPS.2023.105407 * abstract; figures 1,3,4,5,6,7,8 * ----- -/-- | 1-10 | B62D B25J B60V B62C B60F B64U |

The present search report has been drawn up for all claims

| Place of search | Date of completion of the search | Examiner |
|---|---|---|
| Munich | 16 December 2025 | Lumineau, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

**EP 25 19 5553**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LU LU ET AL: "Multiple equilibrium states of a curved-sided hexagram:Part I-Stability of states", ARXIV.ORG, CORNELL UNIVERSITY LIBRARY, 201 OLIN LIBRARY CORNELL UNIVERSITY ITHACA, NY 14853, 13 July 2023 (2023-07-13), XP091562175, * abstract; figure 8 * ----- | 1-10 | |
| A | CN 114 987 639 B (UNIV SHANGHAI ENG SCIENCE) 26 January 2024 (2024-01-26) * abstract; figures 1,6,7,8,9 * ----- | 1-10 | |
| A | CN 118 700 129 A (UNIV SOUTHERN SCI & TECH) 27 September 2024 (2024-09-27) * abstract; figures 2,3,4,5 * ----- | 1-10 | |
| A | US 2023/364777 A1 (VIKAS VISHESH [US] ET AL) 16 November 2023 (2023-11-16) * abstract; figures 1A-1D,4,5,8,9 * ----- | 1-10 | TECHNICAL FIELDS SEARCHED (IPC) |

The present search report has been drawn up for all claims

| Place of search | Date of completion of the search | Examiner |
|---|---|---|
| Munich | 16 December 2025 | Lumineau, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 5553

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2025

| Patent document cited in search report | | Publication date | Patent family member(s) | | Publication date |
|---|---|---|---|---|---|
| US 2023150660 | A1 | 18-05-2023 | NONE | | |
| CN 106240262 | A | 21-12-2016 | NONE | | |
| CN 114589686 | B | 10-10-2023 | NONE | | |
| CN 114987639 | B | 26-01-2024 | NONE | | |
| CN 118700129 | A | 27-09-2024 | CN 118700129 A | | 27-09-2024 |
| | | | US 2025370462 A1 | | 04-12-2025 |
| US 2023364777 | A1 | 16-11-2023 | US 2023364777 A1 | | 16-11-2023 |
| | | | US 2025339958 A1 | | 06-11-2025 |

For more details about this annex : see Official Journal of the European Patent Office, No. 12/82